# FASCICULE DE BREVET EUROPEEN

(11) **EP 0 668 512 B1**
(45) Date de publication et mention de la délivrance du brevet: **31.07.2002**
(21) Numéro de dépôt: 95400301.8
(22) Date de dépôt: 14.02.1995
(51) Int. Cl.: G01S 5/12, G01S 11/04

(54) **Procédé de localisation d'émetteurs**
Verfahren zur Positionsbestimmung von Sendern
Method for positioning of transmitter

(30) Priorité: 18.02.1994 FR 9401863
(43) Date de publication de la demande: 23.08.1995
(73) Titulaire: Thales, 75008 Paris (FR)
(72) Inventeur: Sename, Alain, F-92402 Courbevoie Cédex (FR); Leroux, Xavier, F-92402 Courbevoie Cédex (FR); Chauvel, Didier, F-92402 Courbevoie Cédex (FR)
(74) Mandataire: Lincot, Georges

(56) Documents cités:
- DE-A- 3 622 039
- DE-A- 3 641 626
- FR-A- 1 602 831
- FR-A- 2 641 420

## Description

La présente invention concerne un procédé de localisation d'émetteurs.

Elle s'applique au domaine de la goniométrie haute fréquence pour la localisation d'émissions radioélectriques par station unique, encore connue sous l'abréviation "LSU".

Dans la gamme des fréquences HF comprises entre 1 et 30 MHz, une grande partie des communications est réalisée en propagation ionosphérique. Ce mode de propagation permet d'assurer des liaisons sur des grandes distances grâce à la réflexion des ondes sur les couches ionisées de l'atmosphère. Pour localiser une source radioélectrique un équipement de localisation "LSU" est ordinairement formé par un réseau d'antennes couplé à un ensemble de traitement de signal permettant, par un calcul de goniométrie, de déterminer l'azimut et le site de chaque onde radioélectrique incidente reçue par le réseau d'antennes. La détermination des angles d'azimut et de site est obtenue par un interféromètre qui mesure les déphasages entre les signaux fournis par les différentes antennes du réseau.

Cette technique permet, par exemple à l'aide de trois radiogoniomètres de localiser géographiquement une source de signal à partir de l'azimut relevé par chacun des radiogoniomètres, par l'intersection des trois droites de relèvement correspondantes. Il faut alors pour obtenir une bonne précision que les radiogoniomètres soient situés à des distances importantes les uns des autres relativement à la source à localiser.

Mais elle permet aussi pour des sources éloignées jusqu'à des distances supérieures à 1000 km par exemple, de n'utiliser qu'un seul radiogoniomètre interférométrique, qui associe à l'azimut relevé une estimation de la distance séparant la source d'émission de signal du radiogoniomètre, cette distance étant calculée en fonction des conditions de propagation des ondes dans les hautes couches de l'atmosphère.

L'intérêt de ce dernier mode d'utilisation est qu'il permet par exemple de remplir des missions de localisation d'émetteurs lorsque, pour des raisons géographiques, de délai d'installation, de disponibilité de matériel, une chaîne complète de localisation par triangulation ne peut être installée.

La localisation LSU a jusqu'à présent été réalisée à l'aide de radiogoniomètres à bande étroite à acquisition séquentielle de phase, ou sur des radiogoniomètres à acquisition parallèle de phase à partir de mesures correspondant toutes à une même polarisation, la polarisation des antennes étant souvent différente de la polarisation des ondes incidentes. Comme toute onde incidente est polarisée elliptiquement et peut être considérée comme le résultat d'une onde de polarisation circulaire droite et une onde de polarisation circulaire gauche, le fait de ne travailler en localisation LSU que sur une seule polarisation conduit nécessairement à des extinctions de polarisation. Pour éviter ce phénomène, d'autres systèmes, opérant en polarisation dite "automatique" mais ne travaillant qu'avec une seule polarisation à la fois de l'onde incidente, ont été réalisés. Comme ces systèmes commutent toujours sur la polarisation qui donne le niveau de signal le plus fort, une extinction de polarisation n'est alors plus possible. Cependant dans ces systèmes, la polarisation des antennes n'est pas toujours bien adaptée à celles des ondes incidentes et il s'ensuit une perte dans le niveau de réception du signal.

Pour une localisation par triangulation utilisant trois radiogoniomètres, les systèmes à polarisation automatique donnent des résultats satisfaisants du fait que tous les modes de propagation ionosphérique présentent la propriété de donner des mesures fidèles en azimut à une dispersion ou erreurs de "tilt près". La mesure est cependant moins précise que si le calcul de l'azimut était mené en tenant compte des composantes de polarisation du signal.

Pour une localisation à l'aide d'une seule station, le problème est plus délicat à résoudre du fait que les différents modes de propagation par simple ou double rebond, propagation sur des couches différentes de l'ionosphère, par onde de sol ou ionosphérique, en mode ordinaire ou extraordinaire, présentent tous pour une même source d'émission, des relevés en site différents. Le fait de ne traiter qu'une seule polarisation ne peut qu'entraîner dans ces conditions qu'une perte d'information, et une exclusion dans le traitement de certains modes de propagation.

Dans le meilleur des cas, si les modes de propagation se recoupent la localisation est moins précise. Mais dans d'autres cas, la distance estimée peut être totalement fausse si par exemple la valeur de site d'une onde incidente de polarisation déterminée n'a pu être prise en compte alors qu'elle aurait pu discriminer une onde de sol d'une onde ionosphérique, ou encore un simple rebond d'un double rebond.

L'invention a pour but de résoudre ce problème en utilisant conjointement les deux polarisations du signal reçu sur une station LSU.

A cet effet, l'invention a pour objet un procédé de localisation d'émetteurs radioélectriques pour radiogoniomètre à station unique caractérisé en ce qu'il consiste à effectuer des mesures en azimut et site de chaque onde reçue décomposée en une première onde ordinaire polarisée circulaire droite et une deuxième onde extraordinaire polarisée circulaire gauche, à construire deux histogrammes de distance en site relativement à chacune des deux ondes à partir de deux courbes de prévision site/distance associées aux propagations des ondes ordinaire et extraordinaire et à calculer à partir de ces deux histogrammes une distance globale de localisation d'émetteur.

D'autres caractéristiques et avantages de l'invention apparaîtront ci-après à l'aide de la description qui suit faite en regard des figures des dessins annexés qui représentent :
- La figure 1 une répartition des couches ionisées de l'atmosphère terrestre,
- Les figures 2A à 2F plusieurs modes de propagation d'ondes radioélectriques dans les couches de l'ionosphère,
- La figure 3 un mode de réalisation d'une voie de réception parmi n d'un radiogoniomètre selon l'invention,
- La figure 4 un mode de réalisation du procédé selon l'invention sous la forme d'un organigramme,
- La figure 5 un algorithme de traitement de mise en oeuvre pour l'exécution des étapes de repérage des paquets en site et de calcul de distance de la figure 4,
- Les figures 6A, 6B et 6C une représentation histogrammique utilisée pour la localisation en site d'émetteurs radioélectriques,
- La figure 7 une courbe de prévisions ionosphériques.

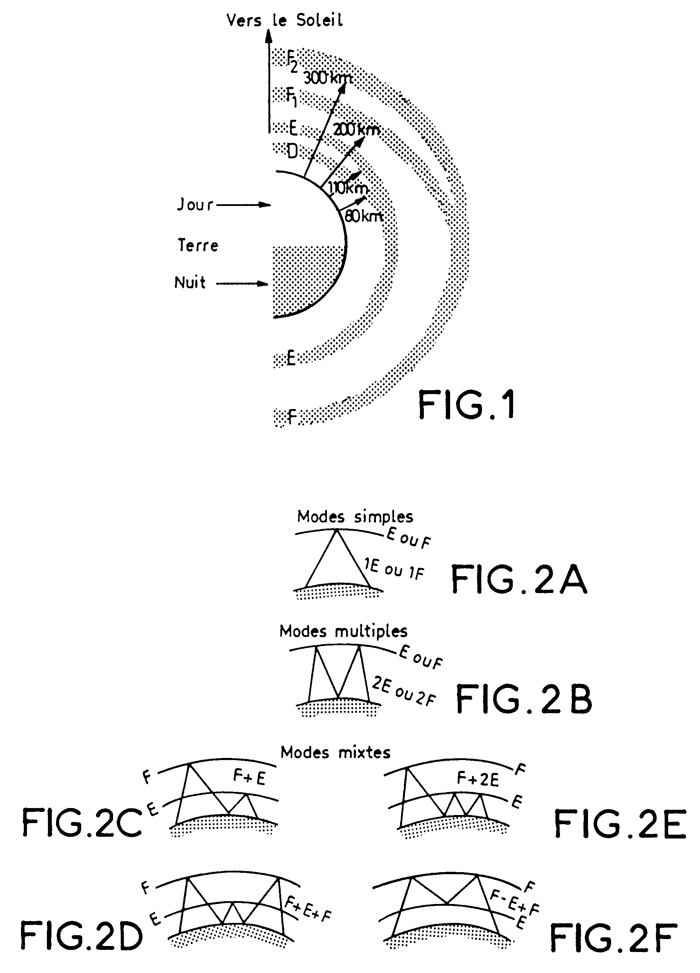

Comme le montre la figure 1, l'ionosphère est la région ionisée de l'atmosphère terrestre qui s'étend de 50 à 2000 km au dessus de la surface de la terre. Elle est divisée en plusieurs couches D, E, F₁, F₂, la couche D n'étant qu'absorbante.

Pour une fréquence et un angle, de site déterminés, plusieurs modes de propagation du type de ceux montrés aux figures 2A à 2F sont en général possibles. Pour des distances inférieures à 2500 km, il n'existe que des modes simples désignés par 1E, 1F figure 2A, ou doubles désignés par E3, 2F sur la figure 2B. Par contre il n'existe aucun des modes mixtes représentés aux figures 2C à 2F.

L'ionosphère étant un milieu anisotrope, il existe en général deux ondes caractéristiques associées à un angle de tir déterminé : une onde ordinaire et une onde extraordinaire. Pour des configurations dites quasi-longitudinales, qui représentent bien la réalité, il est possible de montrer que ces deux ondes sont polarisées circulairement, respectivement lévogyre et dextrogyre.

Pour chaque mode de propagation, ces deux ondes se propagent suivant des chemins légèrement distincts. L'onde extraordinaire est généralement plus atténuée que l'onde ordinaire et possède un angle de site quelque peu supérieur à celle-ci. Mais il est fréquent que les ondes ordinaires et extraordinaires se propagent suivant deux modes différents. Par exemple l'onde ordinaire pourra se propager en onde de sol alors que l'onde extraordinaire se propagera par un rebond sur la couche E.

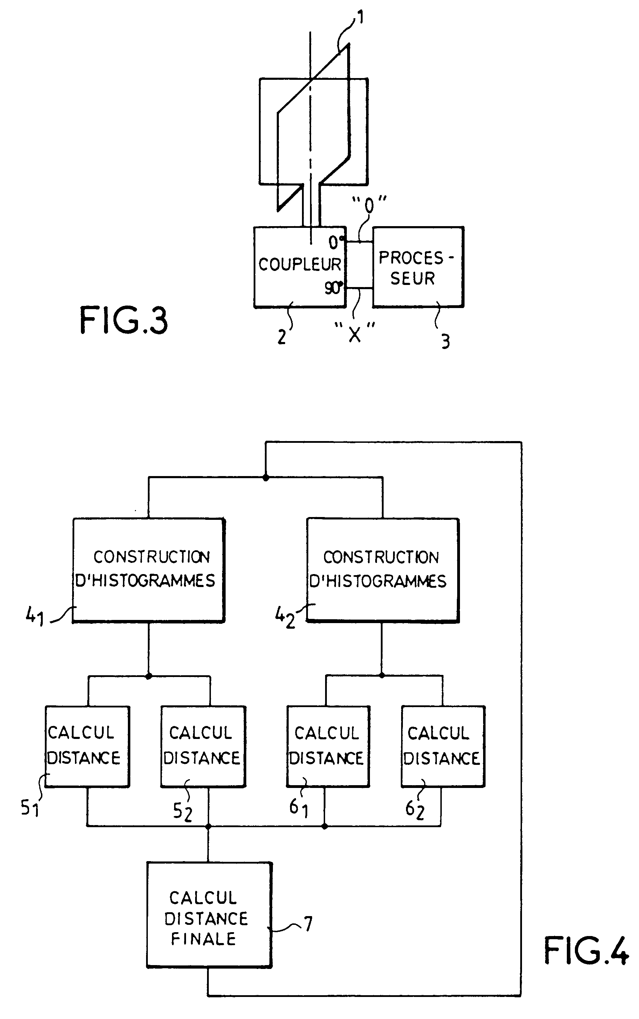

Le procédé selon l'invention utilise d'une manière optimale les caractéristiques de l'onde incidente décrites précédemment. Comme il existe deux ondes différentes, celles-ci sont traitées séparément du fait que les informations transportées par chacune d'elle sont spécifiques. Comme le montre le schéma de la figure 3, des antennes 1 à cadres croisés sont utilisées. Les deux signaux obtenus en sortie des antennes 1 sont combinés par un circuit hybride 2 à 90°. Celui-ci découple le signal reçu sur l'antenne 1 en une polarisation droite et une polarisation gauche en permettant ainsi de séparer l'onde ordinaire (O) et l'onde extraordinaire (X). Un organe de traitement 3 formé par un processeur de signal ou tout dispositif équivalent permet le traitement en temps réel des ondes (O) et (X). Ce traitement a lieu suivant les étapes 4 à 7 de l'organigramme représenté à la figure 4, grâce à une commutation après chaque mesure élémentaire du signal, d'une polarisation à l'autre. Aux étapes 4₁ et 4₂ deux histogrammes de distance sont construits et traités en tenant compte de courbes de prévisions de distance. Les deux ondes (O) et (X) sont traitées d'une manière spécifique aux étapes 5₁, 5₂ et 6₁, 6₂ pour calculer des distances élémentaires en utilisant deux courbes différentes de prédiction de distance élémentaire.

Ensuite une distance finale est extraite à l'étape 7 des distances élémentaires correspondant à un unique mode associé à une courbe de prévision.

Ce principe permet de traiter les cas qui seraient ambigus avec une polarisation unique.

Pratiquement, dans de nombreux cas, il est possible de discriminer des ondes de sol, de séparer de simples et de doubles rebonds ce qui donne moins de tirs aberrants et une précision meilleure.

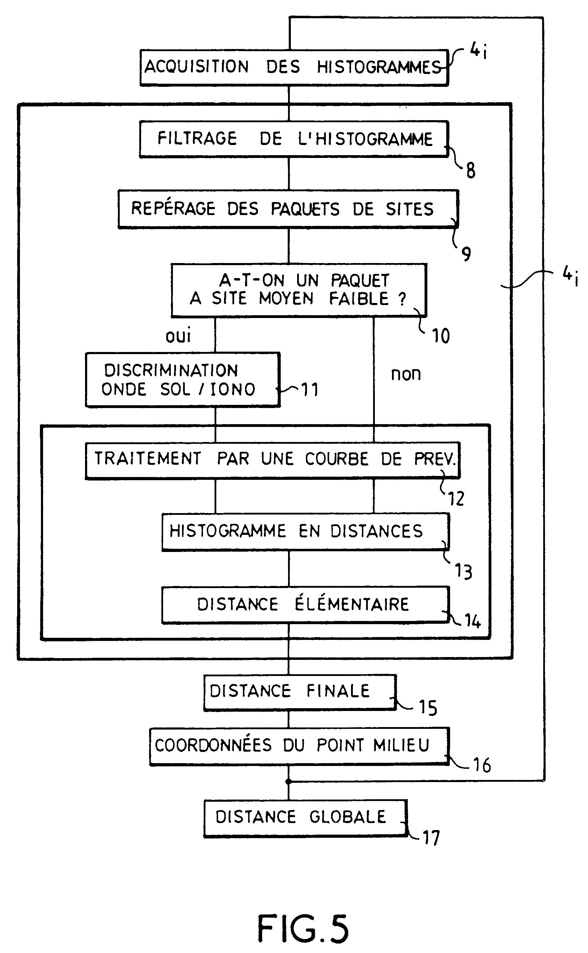

Le calcul de la distance de localisation a lieu pour chaque histogramme 4ᵢ de la manière représentée par l'organigramme de la figure 5.

A partir des mesures en temps réel des polarisations droite et gauche chaque histogramme en site est construit durant les T dernières secondes d'acquisition des résultats élémentaires de goniométrie, T étant le temps d'acquisition du calcul. La Ième colonne de chaque histogramme contient le nombre de mesures reçues pendant T secondes et dont le site est compris dans l'intervalle (I°, I+1°) pour une polarisation donnée.

Par le fait que les différents phénomènes ionosphériques se produisant dans l'ionosphère induisent des erreurs et des dispersions au niveau des angles d'arrivée des signaux reçus, un filtrage des histogrammes en site est réalisé à l'étape 8 pour éliminer les valeurs non significatives ou erronées et donner un poids plus important aux valeurs de sites significatives.

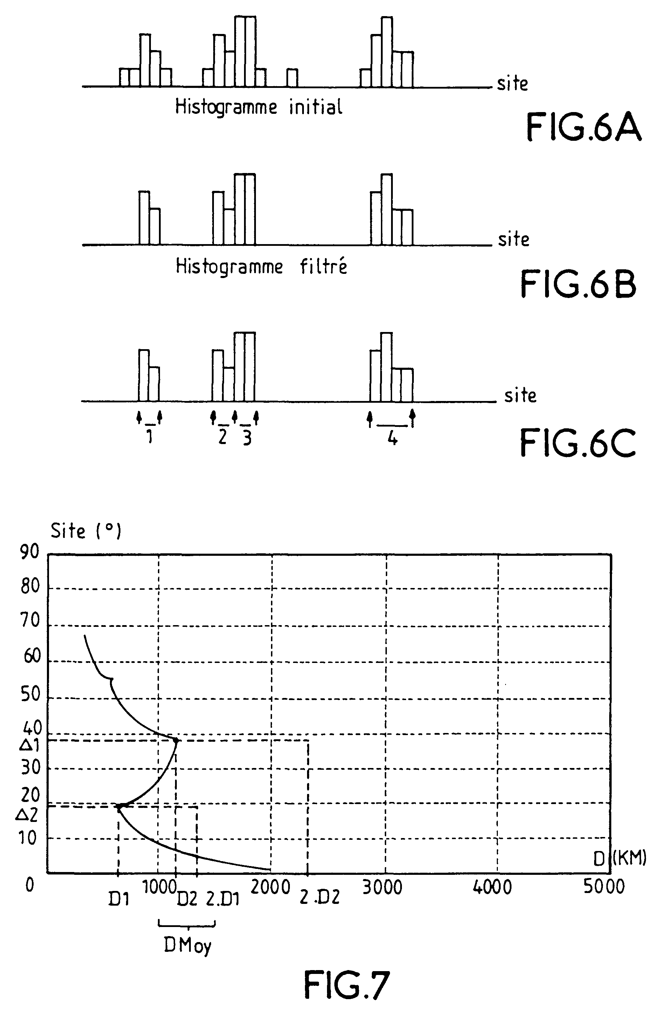

Connaissant pour chaque colonne des histogrammes leur pourcentage de présence par rapport à l'ensemble des résultats, un regroupement des colonnes permet de construire, comme le montre les figures 6A, 6B et 6C, des paquets de site déterminés par leurs bornes formés par deux minima et leur site moyen pondéré par le poids des colonnes. Ce regroupement est exécuté à l'étape 9.

Une analyse des deux histogrammes et de l'ensemble des paquets associés à chacun de ces histogrammes et plus particulièrement des sites faibles permet aux étapes 10 et 11 de déterminer si l'émission reçue est une onde de sol, ou une onde se propageant sur une couche ionosphérique via un ou plusieurs rebonds. Ce niveau de traitement est très important car il permet d'appliquer la diversité de polarisation pour traiter de nombreux cas qui seraient ambigus avec des mesures de polarisation unique.

Il est en effet fréquent que l'onde ordinaire se propage par onde de sol alors que l'onde extraordinaire se propage par simple rebond sur la couche E ou que l'onde O se propage par double rebond alors que l'onde X se propage par simple rebond.

Un traitement de prévisions de distance est ensuite réalisé aux étapes 12, 13 et 14.

Pour effectuer ce traitement il est possible d'utiliser le logiciel de prévisions issu du programme connu HRMNTH du CCIR (base de données de New-Delhi). Ce logiciel permet de créer un fichier de prévision relatif à un lieu donné. Une modélisation en conformité avec les recommandations du Rapport 640-4, volume VI du CCIR est ensuite effectuée sur les données obtenues en exécution du programme HRMNTH.

Cette modélisation s'effectue en utilisant pour la couche E, la formule de MEGGLETON, pour le mode Vallée et la couche F₁ le modèle de DICK & BRADLEY, et pour la couche F₂ le modèle de BRADLEY-DUDENEY.

Les chemins de propagation dans l'ionosphère sont alors déterminés par un programme de tracé de rayons à partir de la connaissance de la distribution verticale de la densité électronique.

Deux courbes du type de celle représentée à la figure 7 sont construites, une associée au mode ordinaire, l'autre associée au mode extraordinaire.

Un fichier de prévision permet d'obtenir pour une heure, une date, une fréquence et un lieu donné, l'ensemble des distances correspondant aux sites demandés (histogrammes) et ceci pour chacun des deux modes.

Les prévisions sont déterminées pour les sites moyens de chaque paquet et pour chacun des histogrammes.

Comme à chaque histogramme sont associées successivement les deux courbes, quatre tableaux de distances sont obtenus à l'étape 14.

A partir des 4 tableaux précédents, 4 distances élémentaires sont extraites grâce à un traitement effectué aux étapes 5ᵢ pour séparer les simples et les doubles rebonds et à partir des 4 distances élémentaires D_{GO}, D_{GX}, D_{DO}, D_{DX} obtenues une distance finale est calculée à l'étape 15 en effectuant par recoupement la moyenne pondérée des deux distances les plus proches correspondant à deux histogrammes différents et deux courbes de propagation différentes.

Cette distance est associée à une erreur radiale, une erreur longitudinale, un poids et une variable indiquant si un mode double rebond était présent dans un des histogrammes. L'erreur radiale est directement fonction de l'écart-type sur l'azimut. L'erreur longitudinale est fonction de notes de qualités des mesures élémentaires et de la dispersion en site de ces mesures.

Les deux erreurs valident la localisation en lui associant un intervalle de confiance (Ellipse d'incertitude).

Après chaque calcul de distance, les coordonnées géographiques sont calculées à l'étape 16 non seulement pour être communiquées à un opérateur, mais aussi pour être utilisées par le calculateur. Ceci permet grâce à un traitement adaptatif non représenté et tant que l'opérateur reste sur une même émission de fournir des prévisions courantes pour le point milieu correspondant à la distance précédemment calculée. Lors de toute première localisation, ces coordonnées sont initialisées aux coordonnées du goniomètre.

Tant que l'opérateur reste sur une même émission, toutes les deux secondes, par exemple, une nouvelle distance peut ainsi être stockée dans un registre tampon.

Suivant l'étape 17 l'opérateur peut à tout moment demander une localisation globale correspondant à l'intégration des N distances élémentaires précédemment calculées.

## Revendications

1. Procédé de localisation d'émetteurs radioélectriques pour radiogoniomètre à station unique **caractérisé en ce qu'**il consiste à effectuer des mesures en azimut et site de chaque onde reçue décomposée en une première onde ordinaire polarisée circulaire droite et une deuxième onde extraordinaire polarisée circulaire gauche, à construire deux histogrammes (4₁, 4₂) de distance en site relativement à chacune des deux ondes à partir de deux courbes de prévision site/distance associées aux propagations des ondes ordinaire et extraordinaire et à calculer à partir de ces deux histogrammes une distance globale de localisation d'émetteur.

2. Procédé selon la revendication 1 **caractérisé en ce qu'**il consiste à séparer les ondes de sol des ondes ionosphériques en regroupant (9) dans chaque histogramme les valeurs de site en paquets en repérant (10, 11) les sites faibles caractéristiques des ondes de sol.

3. Procédé selon les revendications 1 et 2 **caractérisé en ce qu'**il consiste à créer des courbes de prévision pour les sites moyens de chaque paquet, à extraire de chaque histogramme deux distances élémentaires, et à extraire des quatre distances ainsi déterminées une distance finale en effectuant la moyenne pondérée des deux distances retenues après recoupement.

4. Procédé selon l'une quelconque des revendications précédentes **caractérisé en ce qu'**il consiste à séparer les modes ordinaire et extraordinaire d'une onde incidente reçue à l'aide d'une antenne (1) formée par deux cadres croisés à 90°.

## Patentansprüche

1. Verfahren zur Ortung von Funksendern für ein Funkgoniometer mit nur einer Station, **dadurch gekennzeichnet, daß** in Azimut- und Elevationsrichtung jede empfangene Welle gemessen wird, die in eine erste, rechtsdrehend zirkulär polarisierte normale Welle und eine zweite, linksdrehend zirkular polarisierte außerordentliche Welle zerlegt wird, daß zwei Entfernungshistogramme (4₁, 4₂) in Elevationsrichtung bezüglich jeder der beiden Wellen ausgehend von zwei Elevations/Entfernungs-Vorhersagekurven konstruiert werden, die den Ausbreitungen der normalen Welle und der außerordentlichen Welle zugeordnet sind, und daß ausgehend von diesen beiden Histogrammen eine globale Entfernung zur Ortung des Senders berechnet wird.

2. Verfahren nach Anspruch 1, **dadurch gekennzeichnet, daß** es darin besteht, die Wellen entlang der Erdoberfläche von den ionosphärischen Wellen zu trennen, indem in jedem Histogramm die Elevationswerte in Pakete zusammengefaßt werden (9) und indem die geringen Elevationswerte erfaßt werden (10, 11), die für Wellen entlang der Erdoberfläche charakteristisch sind.

3. Verfahren nach den Ansprüchen 1 und 2, **dadurch gekennzeichnet, daß** es darin besteht, Vorhersagekurven für Mittelwerte der Elevationswinkeljedes Pakets zu bilden, aus jedem Histogramm zwei elementare Entfernungen zu extrahieren und aus den vier so ermittelten Entfernungen eine endgültige Entfernung abzuleiten, indem der gewichtete Mittelwert der beiden nach der Zusammenfassung erhaltenen Entfernungen gebildet wird.

4. Verfahren nach einem beliebigen der vorstehenden Ansprüche, **dadurch gekennzeichnet, daß** es darin besteht, den normalen Modus und den außerordentlichen Modus einer Welle zu trennen, die an einer Antenne (1) empfangen wurden, die aus zwei unter 90° gekreuzten Rahmen besteht.

## Claims

1. Single station radiogoniometry radio transmitter location process, **characterized in that** it consists in measuring the bearing and elevation of each received wave, which is broken down into a first ordinary right-circular polarized wave and a second extraordinary left-circular polarized wave, in constructing two histograms (4₁, 4₂) of distance in elevation relating to each of the two waves on the basis of two elevation/distance forecast curves associated with ordinary and extraordinary wave propagations, and in calculating an overall transmitter location distance on the basis of these two histograms.

2. Process according to Claim 1, **characterized in that** it consists in separating ground waves from ionospheric waves by grouping (9) the elevation values in each histogram into packets with identification (10, 11) of the low elevations characteristic of ground waves.

3. Process according to Claims 1 and 2, **characterized in that** it consists in creating forecast curves for the mean elevations of each packet, in extracting two elementary distances from each histogram and in extracting from the four distances thus determined a final distance by computation of the weighted mean of the two distances selected after cross-checking.

4. Process according to any one of the preceding claims, **characterized in that** it consists in separating the ordinary and extraordinary modes of a received incident wave using an antenna (1) formed by two 90° cross frames.
